# EUROPÄISCHE PATENTSCHRIFT

(11) **EP 2 221 556 B1**
(45) Veröffentlichungstag und Bekanntmachung des Hinweises auf die Patenterteilung: **02.11.2011**
(21) Anmeldenummer: 10075015.7
(22) Anmeldetag: 10.01.2010
(51) Int. Cl.: F24J 2/46, H01L 31/058, H01L 31/042

(54) **Solaranlage aus zumindest einem Solarmodul mit einer federnden Lagerung der Abdeckplatte**
Solar array of at least one solar module with a spring-loaded bearing of the cover plate
Installation solaire composée d'au moins un module solaire doté d'un stockage à ressort de la plaque de recouvrement

(30) Priorität: 23.02.2009 DE 102009010225
(43) Veröffentlichungstag der Anmeldung: 25.08.2010
(73) Patentinhaber: SOLON SE, 12489 Berlin (DE)
(72) Erfinder: Schwarze, Sascha Oliver, 12277 Berlin (DE); Schäfer, Maik, 12247 Berlin (DE)

(56) Entgegenhaltungen:
- DE-A1- 19 652 568
- DE-U1- 29 520 203
- DE-U1- 29 612 893
- DE-U1-202006 010 460
- US-A1- 2007 199 561

## Beschreibung

Die Erfindung bezieht sich auf eine Solaranlage aus zumindest einem Solarmodul mit jeweils einem Gehäusekasten mit einer Abdeckplatte und einer Rahmenkonstruktion aus einem im Wesentlichen zumindest L-förmigen Trägerprofil, dessen Querschenkel unter Zwischenlage einer Dichtung auf der Unterseite der Abdeckplatte kantenparallel angeordnet und dessen Längsschenkel mit einer Gehäusewandung des Gehäusekastens verbunden ist, und einer Rastvorrichtung mit einem oberen Rastelement und einem unteren Rastelement zur Fixierung der Abdeckplatte auf dem Gehäusekasten, mit einer federnden Langerung der kantenfreien Abdeckplatte auf den Gehäusewandungen über zumindest zwei Federelemente unter Erzeugung einer Rückstellkraft eines in seiner Größe vorgegebenen Vertikathubs und sind an gegenüberliegenden Kanten der Abdeckplatte auf deren Unterseite kantenparallel angeordnet. Weiterhin sind zumindest der federnden Lagerung zum Schutz vor eindringendem Wasser zur Außenseite des Gehäusekastens hin Dichtelemente vorgelagert.

In Zeiten zunehmender Energieverknappung und Umweltbelastung kommt der sauberen regenerativen Energieumwandlung aus kostenlos eingestrahlter Sonnenenergie besondere Bedeutung zu. Insbesondere gewerbliche und private Dachflächen (allgemein mit "Substrat" bezeichnet, da es sich auch um eine Betonfläche mit horizontaler, vertikaler oder geneigter Ausrichtung handeln kann) können dadurch zu Nutzflächen umgestaltet werden. Dabei kann solare Energie direkt zur Stromgewinnung (Photovoltaik), zur Wassererwärmung (Solarthermie) und/oder zur Brennstofferzeugung durch photovoltaisch induzierte Wasserspaltung genutzt werden. Ein Solarmodul, gleich, ob zur Strom-, Wärme- oder Brennstoffgewinnung, wobei ein Solarmodul zur Wärmegewinnung häufig als "Solarkollektor" bezeichnet wird, besteht in der Regel aus einem rechteckigen Gehäusekasten mit einer Abdeckplatte, die über eine Rahmenkonstruktion fest auf dem Gehäusekasten gehaltert ist. Bei einer Reihenanordnung von Solarmodulen ist deren Wartung und Austausch relativ einfach, da eine gute Zugänglichkeit zu den einzelnen Modulen besteht. Bei einer Matrixanordnung von Solarmodulen - auch mit unterschiedlichen Funktionen - mit mehreren Zeilen und Spalten ist insbesondere eine Zugänglichkeit der inneren Solarmodule nur schwer gegeben. Diese muss dann auch ausschließlich über die Abdeckplatte erfolgen. Dazu ist deren einfache Demontage Voraussetzung.

### STAND DER TECHNIK

Aus dem deutschen Gebrauchsmuster G 92 119121 U1 ist es für einen Solarkollektor bekannt, eine einfache Glasscheibe als Abdeckplatte unter Zwischenlage einer Rundschnurdichtung auf ein im Wesentlichen L-förmiges Trägerprofil aufzulegen und dort mit einer pilzförmigen Dichtlippe festzuklipsen. Dazu weist die Dichtlippe Vorsprünge auf, die hinter Winkeln im Trägerprofil einrasten. Die Dichtlippe dient damit gleichzeitige der Verankerung und der Abdichtung der Glasscheibe im Gehäusekasten. Ein Entfernen der Glasscheibe ist nur mittels Herausziehen der Vorsprünge der Dichtlippe aus den Winkeln im Trägerprofil möglich. Durch Alterungserscheinungen verliert die Dichtlippe aber ihr Verankerungs- und Abdichtungsvermögen. Eine ähnliche Anordnung für einen Hybridkollektor zur gleichzeitigen Strom- und Wärmegewinnung, bei dem die Abdeckplatte als Photovoltaikplatte zur Stromgewinnung über einer Absorberplatte zur Wärmegewinnung angeordnet ist, ist aus dem deutschen Gebrauchsmuster DE 20 2006 010 460 U1 bekannt.

Aus der europäischen Patentanmeldung EP 0 877 214 A2 ist es ebenfalls für einen Solarkollektor bekannt, die Glasscheibe über eine Dichtungseinrichtung auf den Rand des Gehäusekastens aufzulegen. Die Dichtungseinrichtung dient der Anpassung an unterschiedliche Druckverhältnisse im Gehäusekasten und weist ein inneres weichelastisches Dichtelement, ein mittleres hartelastisches Dichtelement und ein äußeres plastisches Dichtelement auf. Die Plastizität des plastischen Dichtelements nimmt mit steigender Temperatur zu, sodass das plastische Dichtelement zu fließen beginnt und den Zwischenraum zwischen Glasscheibe und Rand des Gehäusekastens ausfüllt. Eine Demontage der Glasscheibe ist nur unter Zerstörung der plastischen Dichtung möglich. Das hartelastische Dichtelement dient als gering verformbare Lagerung der Glasscheibe. Das weichelastische Dichtelement ist geschlossenzellig aufgebaut und sorgt für eine geringfügige Rückstellung der Dichtungseinrichtung im druckfreien Zustand. Arretiert wird die Glasscheibe mittels eines umgreifenden Kantenschutzes, zu dem aber keine weiteren Ausführungen gemacht werden.

Eine Dichtung ebenfalls zum Ausgleich von Plattenbewegungen bei einem Sollarkollektor ist aus dem deutschen Gebrauchsmuster DE 296 12 893 U1 bekannt. Hier wird eine einfache Glasscheibe über der Absorberscheibe mittels einer doppelt v-förmigen und geschlitzten Dichtung angeordnet. Dabei befindet sich die Dichtung unterhalb der Glasscheibe und wird auf eine Hakenleiste in einem Rahmenprofil aufgeklipst. Die Dichtung wird an die Glasscheibe angeklebt. Ein Entfernen der Glasscheibe ist nur durch Zerstören der Klebung oder Herunterziehen der Dichtung von der Hakenleiste möglich. Das Rahmenprofil berührt nicht die Glasscheibe, sodass diese keine weitere direkte Umrahmung aufweist. Aus der europäischen Patentanmeldung EP 1 146 297 A1 ist es bekannt, ein geneigtes Solarpeneel in ein Rahmenprofil einzulegen, das zwei Rundnuten aufweist. In diese werden zur Fixierung des Rahmenprofils durch die Gehäusewandung des Gehäusekastens hindurch Blechschrauben eingeschraubt. Dabei umfasst das Rahmenprofil das Solarpaneel nur in Richtung der Neigung und fixiert. Quer zur Neigung weist das Rahmenprofil keine Umfassung des Solarpaneels auf, sodass hier keine Kante entsteht, an der sich ablaufendes Wasser sammeln und zu einer Verschmutzung führen könnte.

Weiterhin ist aus der deutschen Offenlegungsschrift DE 10 2008 028 489 A1 ein Hybridmodul zur kombinierten Solarstrom- und -wärmeerzeugung bekannt, bei dem die Photovoltaikplatte als Laminat ohne weitere Abdeckung und die Absorberplatte von einem F-förmigen Rahmenprofil aufgenommen werden. Zur Befestigung ist der Längsschenkel des Rahmenprofils doppelt ausgeführt und wird auf ein einschneidiges Gehäuseprofil aufgesteckt. Somit kann das gesamte Modul nach oben abgezogen werden. Weitere Dichtmaßnahmen sind allerdings nicht offenbart. Aus der deutschen Offenlegungsschrift DE 196 52 568 A1 ist ein ähnliches Rahmenprofil für einen Solarkollektor bekannt. Dabei wird eine kantenfreie Abdeckplatte auf einem Trägerprofil mit Hilfe einer seitlichen Dichtung gegenüber einem Profilsteg fixiert und abgedichtet. Das Trägerprofil weist einen gespaltenen vertikalen Schenkel auf, in dem sich zwei Rastnuten befinden. Zur Fixierung der Abdeckplatte mit dem Trägerprofil auf dem Gehäusekasten weist die Gehäusewandung seitliche Rastrippen auf, über die die Rastnuten geschoben werden, sodass sie dahinter verrasten. Ein Lösen der Abdeckplatte ist nur durch gewaltsame Überwindung der Rastkraft möglich.

Der gattungsbildende Stand der Technik, von dem die vorliegende Erfindung ausgeht, wird in der europäischen Patentanmeldung EP 1 233 238 A1 offenbart. Gezeigt wird für eine Solaranlage zur Wärmeerzeugung (Solarkollektor) eine Rahmenkonstruktion zur festen Halterung einer Glasscheibe als Abdeckplatte auf einem Gehäusekasten. Dabei besteht die Rahmenkonstruktion aus einem im Wesentlichen L-förmigen Trägerprofil, auf dessen Querschenkel unter Zwischenlage einer Rundschnurdichtung eine Glasscheibe als Abdeckplatte aufgelegt ist. Der Längsschenkel des Trägerprofils ist auf nicht weiter dargestellte Weise mit einer Gehäusewandung des - ebenfalls nicht weiter gezeigten - Gehäusekastens verbunden. Die Glasscheibe wird mittels einer Rastvorrichtung auf dem Gehäusekasten arretiert. Dazu wird eine im Wesentlichen F-förmige Abdeckleiste verwendet, deren Längsschenkel unter Zwischenlage einer einrastenden Dichtung auf der Oberseite der Glasscheibe über die Glasscheibe greift und die auf der Innenseite eines der beiden Querschenkel eine Rastrippe als ein Rastelement aufweist. Mit dieser wird die Abdeckleiste über eine entsprechende Rastrippe als anderes Rastelement am Längsschenkel der Tägerprofils geschoben, sodass Abdeckleiste und Trägerprofil fest miteinander verrasten. Ein Lösen der Glasscheibe ist wiederum nur durch gewaltsames Überwinden der Rastkraft und vollständiges Entfernen der Abdeckleiste unter Auftrennen der Dichtung auf der Oberseite der Glasscheibe möglich, eine kontrollierte Betätigung der Rastvorrichtung bzw. der Rastelemente ist nicht vorgesehen. Andererseits sorgt aber auch nur die von der Rastvorrichtung über die Abdeckleiste aufgebrachte Rastkraft für die Arretierung der Abdeckplatte unter Windangriffslast. Durch das Übergreifen der Abdeckleiste auf die Glasscheibe ist diese nicht kantenfrei und es entsteht auf der Glasscheibe ein Absatz, an dem sich schnell Verschmutzungen anlagern können. Durch das Übergreifen der Abdeckleiste über die Glasplatte besteht außerdem eine Abhängigkeit der Rahmenkonstruktion von der Dicke der Abdeckplatte.

### AUFGABENSTELLUNG

Die **AUFGABE** für die vorliegende Erfindung ist daher darin zu sehen, eine gattungsgemäße Solaranlage der eingangs beschriebenen Gattung zur Verfügung zu stellen, bei der die Rahmenkonstruktion zur festen Halterung der Abdeckplatte auf dem Gehäusekasten mittels einer Rastvorrichtung so ausgeführt ist, dass eine beliebig häufige beschädigungsfreie Montage und Demontage der Abdeckplatte - auch im Innenbereich eines Modulfeldes - problemlos möglich ist. Dabei soll aber die von der Rastvorrichtung ausgeübte Rastkraft trotzdem so groß sein, dass ein Abheben der Abdeckplatte unter Windangriff sicher vermieden ist. Darüber hinaus soll eine Verschmutzung der Oberseite der Abdeckplatte durch kantenübergreifende Rahmenteile vermieden werden. Schließlich soll die Rahmenkonstruktion so ausgestaltet sein, dass unterschiedliche Abdeckplatten und damit auch unterschiedliche Solarmodule ohne Rahmenveränderungen eingesetzt werden können, wobei insbesondere aber auch ein harmonisches Erscheinungsbild gewährleistet sein soll. Die erfindungsgemäße **LÖSUNG** für diesen Aufgabenkomplex ist dem Hauptanspruch zu entnehmen. Vorteilhafte Modifikationen der Erfindung sind den Unteransprüchen zu entnehmen, die im Nachfolgenden im Zusammenhang mit der Erfindung näher erläutert werden.

Bei der erfindungsgemäßen Solaranlage ist eine spezielle Ausbildung der Rastvorrichtung vorgesehen, die auf der federnden Lagerung der Abdeckplatte beruht. Dazu sind zumindest ein oberes Rastelement, das fest mit dem Trägerprofil, das wiederum fest mit der Abdeckplatte verbunden ist, verbunden ist, und zumindest ein unteres Rastelement, das fest mit dem Gehäusekasten verbunden ist, vorgesehen. Bei geöffneter Rastvorrichtung bei auf den Gehäusekasten aufgelegter Abdeckplatte weisen die beiden Rastelemente einen Abstand von maximal dem Vertikalhub zueinander auf. Bei geschlossener Rastvorrichtung bei fixierter Abdeckplatte auf dem Gehäusekasten wurde die Abdeckplatte um den genau vorgegebenen Vertikalhub der Federelemente nach unten gedrückt und die beiden Rastelemente einen lösbaren Eingriff miteinander. Dabei steht der Eingriff (die Verrastung) unter der Belastung der von den Federelementen erzeugten Rückstellkraft steht, sodass ein Entrasten einfach möglich ist.

Ein einfaches Abheben der Abdeckplatte durch angreifende Windlasten und Überwinden der Rastkraft ist bei der Erfindung nicht möglich. Andererseits ist aber eine beliebig häufige Montage und Demontage der Abdeckplatte vom Gehäusekasten - auch, wenn sich dieses inmitten eines Modulfeldes befindet - problemlos ohne Beschädigung oder Zerstörung von Montageelementen möglich. Durch die Verwendung von beispielsweise zwei kräftigen Montagesaugnäpfen kann ein Monteur die Abdeckplatte jederzeit einsetzen und verrasten, aber auch wieder entrasten und Abheben. Weiterhin entstehen durch die Anordnung des Trägerprofils unterhalb der Abdeckplatte und konsequenten Vermeidung von kantenübergereifenden Profilen auf der Oberseite der Abdeckplatte keine Schmutzkanten. Die Abdeckplatte kann bei Indachsystemen in der Wasserablaufebene liegen und die wasserführende Schicht bilden. Außerdem ist durch diese Anordnung die Rahmenkonstruktion nicht abhängig von der Größe und Stärke der Abdeckplatte, sodass diese beliebig ausgeführt sein kann. Insbesondere bei hybriden Modulfeldern (mit gemischten Funktionen für zumindest Strom- und Wärmeerzeugung) kann die Abdeckplatte aber auch auf allen Gehäusekästen identisch ausgeführt sein, sodass sich ein besonders harmonisches Erscheinungsbild ergibt und für den Betrachter nicht erkennbar ist, welche Art von Modul sich unterhalb der jeweiligen Abdeckplatte befindet.

Über die federnde Lagerung ist die Abdeckplatte auf den Seitenflächen der Gehäusewandungen des Gehäusekastens gelagert. Um zu verhindern, dass Wasser in das Innere des Gehäusekastens eindringt, sind der federnden Lagerung zur Außenseite des Gehäusekastens hin Dichtelemente vorgelagert. Dabei kann beispielsweise eine parallele Anordnung der Federelemente und Dichtelemente vorgenommen werden. Bei den Federelementen kann es sich beispielsweise um einfache druckbelastete Schraubenfedern handeln, die an mehreren Stellen auf der Seitenfläche einer Gehäusewandung angeordnet sind. Parallel vor den Druckfedern kann beispielsweise auf jeder Seitenfläche eine Dichtschnur angeordnet sein.

Nach einer besonders bevorzugten Ausführungsform der Erfindung können die Federelemente in die Dichtelemente integriert sein und einstückige Federdichtungen bilden. Derartige Federdichtungen haben dann sowohl eine federnde Wirkung mit einem definierten Vertikalhub als auch eine abdichtende Wirkung gegen eindringendes Wasser. Dabei kann eine derartige Federdichtung bevorzugt als im Wesentlichen lambda-förmig ausgebildete elastische Dichtlippe konstruiert sein. Eine derartige Dichtlippe ist durch drei Schenkel charakterisiert. Dabei können bei der Erfindung bevorzugt der obere Schenkel der Dichtlippe an den Querschenkel des Trägerprofils und die beiden unteren Schenkel (schräg zum Inneren des Gehäusekastens und schräg nach Außen verlaufend) an das Gehäusekasten anschließen. Die federnde Lagerung der Abdeckplatte erfolgt dann über oberen und den ersten unteren, schräg nach hinten zum Inneren des Gehäusekastens verlaufenden Schenkel. Diese beiden Schenkel definieren dann über ihre Länge, ihren Anstellwinkel und ihre Elastizität den Vertikalhub der Abdeckplatte. Der zweite untere, schräg nach vorne verlaufende Schenkel dient dann der Abdichtung des Innenraums des Gehäusekastens vor eindringendem Wasser. Um die Federwirkung noch zu verstärken bzw. genauer definieren zu können, kann bevorzugt zwischen dem den beiden unteren Schenkeln der lambdaförmigen Dichtlippe ein offenzelliges Elastikprofil angeordnet sein. Durch die Offenzelligkeit, beispielsweise in Form von Löchern, wird nach dem Zusammendrücken des Elastikprofils eine Rückstellung in seine ursprüngliche Form (wie bei einem Schwamm) bewirkt. Zur Befestigung der lambda-förmigen Dichtlippe kann diese nach einer nächsten Fortführung der Erfindung bevorzugt eine u-förmige Abwinklung des oberen Schenkels aufweisen, die in eine u-förmige Abwinklung des Endes des Querschenkels des Trägerprofils hineingreift. Es ergibt sich dann eine feste Verbindung zwischen beiden Abwinklungen nach Art einer Kappnaht.

Bevorzugt ist daher vorteilhaft bei der Erfindung eine Ausbildung des Dichtelements als im wesentlichen lambda-förmig ausgebildete dreischenkelige Dichtlippe vorgesehen. Dabei schließt der erste Schenkel der lambda-förmigen Dichtlippe (der nach oben weisende Schenkel) an den Querschenkel des Trägerprofils an. Der zweite Schenkel (einer der beiden schräg nach unten weisenden Schenkel) schließt an die Seitenfläche der darunterliegenden Gehäusewandung an, ist elastisch ausgebildet und weist die den Vertikalhub bestimmende Länge auf. Dieser Schenkel wird zur Betätigung der Rastvorrichtung zusammengedrückt und wieder entlastet. Der dritte Schenkel der lambda-förmigen Dichtlippe ragt frei über die Gehäusewandung hinweg nach außerhalb des Gehäusekastens hinaus. Damit erfüllt dieser Schenkel eine reine Abdichtungsfunktion und sorgt dafür, dass ablaufendes Wasser nicht auf den Übergang zwischen Trägerprofil und Gehäusewandung trifft. Weiterhin kann bevorzugt eine definierte und sichere Verbindung des ersten (nach oben zeigenden) Schenkels der lambda-förmigen Dichtlippe mit dem Trägerprofil vorteilhaft dadurch erzielt werden, dass der erste Schenkels der Dichtlippe eine u-förmige Abwinklung aufweist, die in eine u-förmige Abwinklung des Endes des Querschenkels des Trägerprofils hineingreift.

Bei der Ausbildung der Rastvorrichtung können durchaus bekannte Rastvorrichtungen, die auf zwei, mit den zu verrastenden Objekten befestigten Rastelementen beruhen, zum Einsatz kommen. Bei der Erfindung kann bevorzugt eine Ausbildung des unteren Rastelements als im Inneren des Gehäusekastens angeordneter Stift und eine Ausbildung des oberen Rastelements als am Längsschenkel der Trägerprofils angeordnetem Hinterschneidungsprofil, das einen Einschubbereich und einen Rückhaltebereich für den Stift aufweist zum Einsatz kommen. Dabei ist für eine derartige Ausbildung noch eine seitliche Verschiebbarkeit der Abdeckplatte auf dem Gehäusekasten in Richtung des Einschubbereiches erforderlich. Zum Verrasten der Abdeckplatte wird diese gegen die Rückstellkraft der Federelemente heruntergedrückt, sodass die Stifte im Inneren des Gehäusekastens in die Einschubbereiche der Hinterschneidungsprofile an den Trägerprofilen gelangen. Durch seitliches Verschieben der Abdeckplatte im niedergedrückten Zustand werden die Stifte dann entlang der Einschubbereiche in die Rückhaltebereiche der Hinterschneidungsprofile überführt. Durch Entlasten der Federelemente kommt dann die Abdeckplatte um den vorgegebenen Hub wieder hoch, sodass die Stifte in den Rückhaltebereichen einrasten und verriegeln. Ein Entriegeln der Abdeckplatte ist nur reverses Ausführen des Einrastvorgangs möglich. Dabei können die Stifte bevorzugt als Bolzen ausgebildet sein, die mit einer Trägerplatte fest verbunden sind. Die Tragplatte verleiht dem Bolzen Stabilität und sorgt für eine gute Befestigung auf der Innenseite der Gehäusewandung.

Alternativ kann bei der Erfindung für die Rastvorrichtung auch eine Ausbildung des oberen Rastelements als Stiftfortsatz am Ende des Längsschenkels und des unteren Rastelements als an der Gehäusewandung angeordneter schwenkbarer und federbelasteter Rasthaken vorgesehen sein. Für diese Ausführungsform ist eine seitliche Verschiebbarkeit der Abdeckplatte nicht erforderlich. Diese wird einfach über den Vertikalhub von oben mit den Stiftfortsätzen in die zurückweichenden Rasthaken eingedrückt und verriegelt. Eine Entriegelung erfolgt dann über ein Zurückdrücken des Rasthakens mit einem geeigneten Werkzeug. Durch die Rückstellkraft der federnden Lagerung wird die Abdeckplatte nach oben gedrückt und kann leicht entnommen werden. Dabei ist es vorteilhaft, wenn während der Demontage der Rasthaken der Rastvorrichtung in geöffneter Stellung in einem gefederten Rückhalthaken fixierbar ist.

Eine andere Alternative kann vorteilhaft bei der Erfindung auch gekennzeichnet sein durch einen unteren Querschenkel am Trägerprofil oder am Zusatzprofil (siehe unten), der im Innenbereich des Gehäusekastens verläuft, und eine Ausbildung des oberen Rastelements als Einschubprofil im unteren Querschenkel sowie eine Ausbildung der unteren Rastelements als Rastbolzen mit einer Einschubnut, wobei der Rastbolzen mit dem Gehäusekasten, insbesondere mit dessen Boden verbunden ist. Diese Alternative entspricht im Wesentlichen der zuerst genannten Ausführungsform der Rastvorrichtung, wobei jedoch nunmehr das obere Rastelement in einem zusätzlichen Querschenkel des Trägerprofils angeordnet ist. Das obere Rastelement in Form des Einschubbereiches wird durch Herunterdrücken der Abdeckplatte über die federnde Lagerung in den Erfassungsbereich des Rastbolzens gebracht und durch seitliches Verschieben der Abdeckplatte verriegelt, wobei die Rückstellkraft auf die Abdeckplatte zur Verriegelung beiträgt. Zum Demontieren ist der reverse Vorgang durchzuführen.

Zur weiteren Verbesserung der Verrastung können die Längsschenkel der Trägerprofile zumindest im Bereich der Hinterschneidungsprofile verstärkt ausgebildet sein. Zur zusätzlich weiteren Verbesserung der sicheren Lagerung der Abdeckplatte auf dem Gehäusekasten ist eine nächste Modifikation der Erfindung vorteilhaft gekennzeichnet durch eine Anordnung eines L-förmigen Zusatzprofils, dessen kurzer Schenkel in Verlängerung des Querschenkels der Trägerprofils die Abdeckplatte trägt und dessen langer Schenkel parallel zum Längsschenkel des Trägerprofils angeordnet ist. Es ergibt sich ein im Wesentlichen T-förmiges Trägerprofil, das mehrstückig, aber auch einstückig ausgeführt sein kann. Dabei kann es sich um eine massive oder beispielsweise aus gebogenem Blech erzeugte mehrlagige einstückige Ausführung handeln. Für die Rastvorrichtung bei der Erfindung ist eine Anordnung des Trägerprofils an den beiden sich gegenüberliegenden Gehäusewandungen des Gehäusekastens vorteilhaft, um eine gute federnde Lagerung und Verrastung sicher zu gewährleisten. Dabei handelt es sich bei einer rechteckigen Ausführung des Gehäusekastens in der Regel um die beiden längeren Gehäusewandungen. Eine Lagerung und Verrastung an den beiden gegenüberliegenden kürzeren Gehäusewandungen ist aber ebenfalls möglich.

Bei den zuvor beschriebenen Ausführungsformen der Rastvorrichtung nach der Erfindung wurde immer jeweils das obere und das untere Rastelement beschrieben. Im Minimalfall weist die Rastvorrichtung genau ein oberes und ein unteres Rastelement auf, die vorteilhaft in der Mitte der Längskanten (oder auch Querkanten) des Gehäusekastens montiert sind. Eine weitere Verbesserung der Rastkraft ergibt sich jedoch bei einer Anordnung von mehreren Rastelementen entlang der Gehäusewandungen des Gehäusekastens. Für eine gute Sicherung der Abdeckplatte auf einem Gehäusekasten normaler Abmaße (mit einer Längskante in einem Bereich von 1,80 m) ist es vorteilhaft, wenn jeweils beispielsweise drei Rastelemente vorgesehen sind (mittig und in den beiden Randbereichen der Gehäusewandung). Die Abdeckplatte wird dann an drei Punkten entlang ihrer Längskanten auf beiden Seiten sicher gegen alle angreifenden Windlasten fixiert.

Eine weitere Verbesserung der Lagerung ergibt sich, wenn das Zusatzprofil an allen vier Kanten der Abdeckplatte umlaufend angeordnet ist. Gleiches gilt auch für Dichtelemente, sodass das Innere des Gehäusekastens sicher vor eindringendem Wasser geschützt ist. Die Abdeckplatte ist dann im gesamten Kantenbereich vollflächig unterstützt und kann sicher aufgelegt, aber auch wieder entfernt werden. Vorteilhaft verläuft dann an den beiden Längskanten ein kombiniertes Profil aus Träger- und Zusatzprofil und an den beiden Schmalkanten des Gehäusekastens nur das Zusatzprofil. Zur weiteren Sicherung gegen Abheben der Abdeckplatte unter angreifender Windlast kann vorteilhaft auch ein nach außen gebogenes, u-förmiges Ende des langen Schenkels des Zusatzprofils im Bereich einer Kante der Abdeckplatte ohne Rastvorrichtung vorgesehen sein. Dabei greift bei geschlossener Rastvorrichtung das u-förmige Ende in eine Hinterschneidung in der Gehäusewandung ein. Weitere Ausführungen zu derartigen Konstruktionsmodifikationen sind dem speziellen Beschreibungsteil zu entnehmen.

Bereits weiter oben wurde ausgeführt, dass die Solaranlage nach der Erfindung aus einer Modulmatrix bestehen kann. Diese kann bevorzugt als Indachanlage ausgeführt sein, d.h. die Module sind in die Dachhaut, in die Dachsteine integriert und liegen nicht darauf. Bevorzugt ist dabei eine benachbarte Anordnung vom mehreren Gehäusekästen und Abdeckplatten möglich, wobei zwischen den benachbarten Abdeckplatten ein Spalt vorgesehen ist. Dieser Spalt dient der Demontage der Abdeckplatten, beispielsweise zum seitlichen Verschieben der Abdeckplatten zum Herausschieben des Stifts aus dem Einschubbereich oder zum Einführen eines Werkzeugs, beispielsweise zum Zurückschieben des Rasthakens. Dadurch ergibt sich ein gleichmäßiger, harmonischer Spalt zwischen allen vorgesehenen Abdeckplatten. Da bei Indachausführungen die Abdeckplatten in der wasserführenden Ebene liegen, kann das Wasser in den Spalten entlang der Abdeckplatten ablaufen. Grundsätzlich kann die Abdeckplatte an allen vier Gehäuseseiten etwas über die Gehäusewandungen hinausragen. Das Innere der Gehäusekästen ist dabei sicher durch Dichtungen vor eindringendem Wasser geschützt. Weiterhin sind vorteilhaft zwischen benachbarten Gehäusekästen oder zwischen den Gehäusekasten und dem anschließenden Substrat Abdeckbleche oder Anschlussbleche angeordnet, um einen korrekten Wasserablauf zu gewährleisten. Zwischen zwei benachbarten Gehäusekästen können die Abdeckbleche als einfache Bleche mit zwei abgewinkelten kanten ausgebildet sein, die unterhalb der federnden Lagerung um die Gehäusewandungen herumgreifen und durch die federnde Lagerung an die Gehäusewandungen angedrückt werden. Um eine gute Durchlüftung der Gehäusekasten und damit Schwitz- oder Stauwasserbildung zu vermeiden, ist es außerdem vorteilhaft, wenn Belüftungsöffnungen in den Gehäusewandungen des Gehäusekastens vorgesehen sind.

Weiter oben wurde bereits ausgeführt, dass es mit der Solaranlage nach der Erfindung möglich ist, Solarmodule unterschiedlicher technischer Funktion auf einem Substrat, beispielsweise Dach, zu installieren, ohne dadurch das harmonische Gesamterscheinungsbild zu zerstören. Bekannte Anlagen weisen dabei ausschließlich gerahmte Module auf. Alle Solarmodule bei der Erfindung weisen jedoch eine einheitliche rahmenlose Abdeckplatte auf. Dabei kann es sich bevorzugt um eine einfache Glasplatte handeln, die die Absorberplatte in einem Solarkollektor abdeckt oder ein einfaches Fenster ohne weitere technische Funktion darstellt. Es kann sich aber auch um eine Photovoltaikplatte handeln, die als Glasplatte mit unterseitig angeordneten Solarzellen oder als Laminat mit eingegossenen Solarzellen ausgebildet sein kann. Dabei kann Solarstrom oder auch - bei einer entsprechenden Ausführungsform mit einem Elektrolyten - Brennstoff erzeugt werden. Somit kann bei der Solaranlage nach der Erfindung besonders bevorzugt eine vorteilhafte matrixförmige Anordnung von Photovoltaikmodulen und/oder Thermosolarmodulen und/oder Brennstoffmodulen und/oder Fenstermodulen, wobei alle Module mit einer auf der Sichtseite einheitlichen gestalteten Abdeckplatte abgedeckt sind. Dabei ist es sowohl möglich, dass jedes Solarmodul nur eine Funktion aufweist, die Unterbringung von Hybridmodulen mit mehreren technischen Funktionen ist aber ebenfalls möglich. Bei einem Hybridmodul mit einer gleichzeitigen Erzeugung von Solarstrom- und -wärme ist dann der Einsatz eines selektiv wirkenden Reflektors besonders vorteilhaft. Weiter technische Details zur der Solaranlage nach der Erfindung sind dem nachfolgenden speziellen Beschreibungsteil zu entnehmen.

### AUSFÜHRUNGSBEISPIELE

Die Solaranlage nach der Erfindung wird in verschiedenen Varianten nachfolgend anhand von Ausführungsbeispielen für einzelne Details in den schematischen **FIGUREN** näher erläutert. Dabei zeigt:
- **FIGUR 1**: ein Querschnittdetail im Bereich des Gehäusekastens,
- **FIGUR 2**: ein Querschnittdetail im Bereich der federnden Lagerung,
- **FIGUR 3**: ein Ansichtsdetail im Bereich des Gehäusekastens,
- **FIGUR 4**: ein Ansichts-/Schnittdetail im Innenbereich des Gehäusekastens,
- **FIGUR 5A, 5B**: weitere Ausführungsformen der federnden Lagerung,
- **FIGUR 6A, 6B, 6C**: weitere Ausführungsformen der Rastvorrichtung und
- **FIGUR 7**: ein Ansichtsdetail der Solaranlage auf einem Substrat.

Bei einzelnen **FIGUREN** und/oder in der Beschreibung nicht erwähnte oder gezeigte Bezugszeichen sind den vorangehenden FIGUREN bzw. deren Beschreibung zu entnehmen.

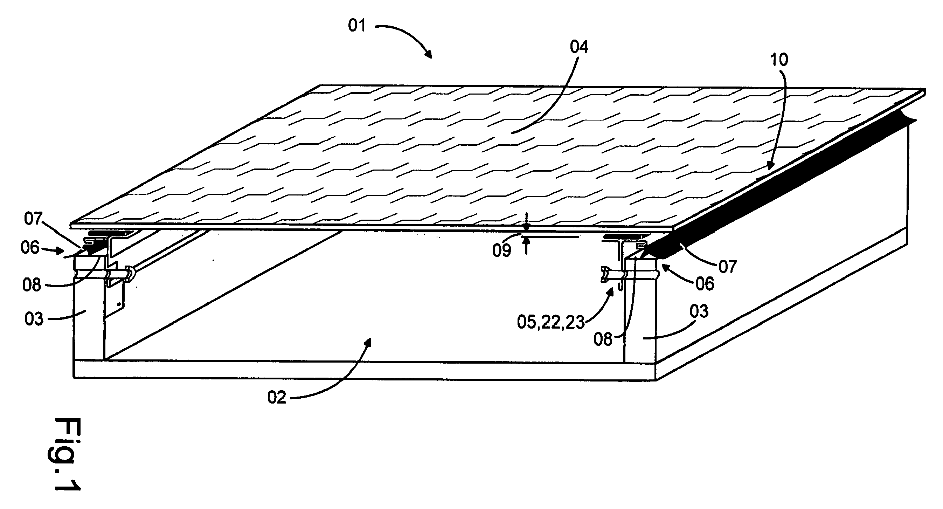

Die **FIGUR 1** zeigt eine Solaranlage **01** nach der Erfindung, beispielsweise zur Erzeugung von Solarstrom oder -wärme, zur Anordnung auf einem Substrat, beispielsweise auf einer geneigten Dachfläche oder einer horizontalen Betonfläche (nicht gezeigt). Gezeigt ist im Schnittdetail ein rechteckiger Gehäusekasten **02** mit Gehäusewandungen **03** und einer kantenfreien Abdeckplatte **04,** die mittels einer Rastvorrichtung **05** auf dem Gehäusekasten **02** arretiert ist. Dabei ist die Abdeckplatte **04** über eine federnde Lagerung **06** mit zumindest zwei Federelementen **07** auf Seitenflächen **08** der Gehäusewandungen 03 an gegenüberliegenden Kanten **10** der Abdeckplatte **04** gelagert.

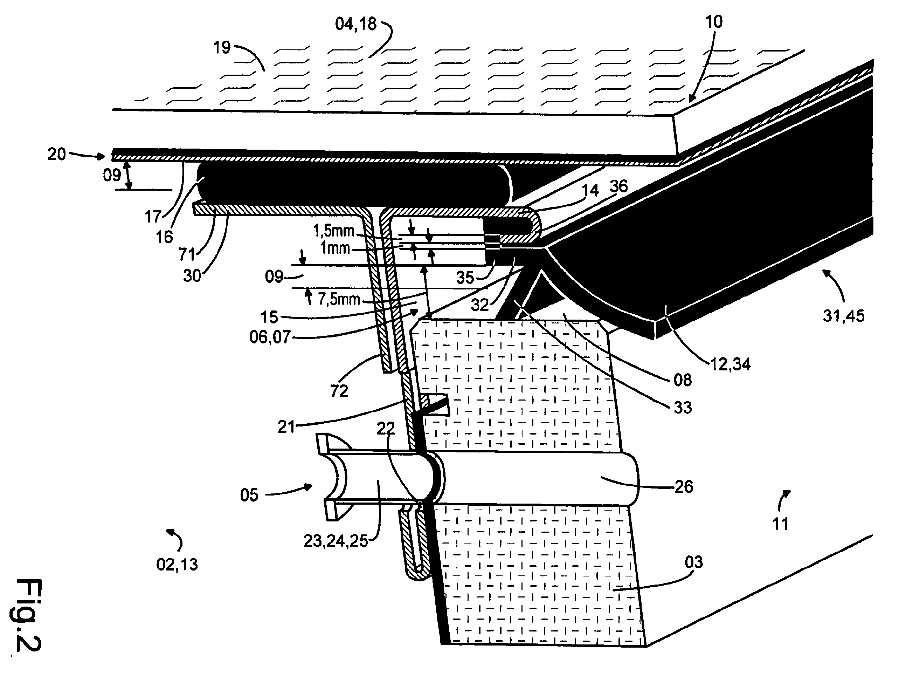

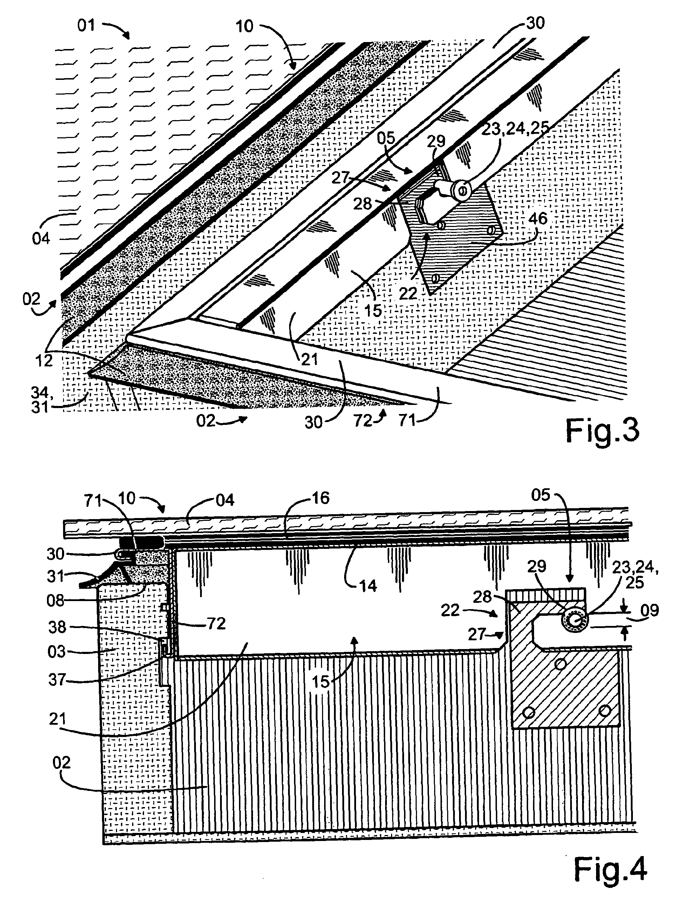

In der **FIGUR 2** ist eine erste Ausführungsform der Erfindung im Schnittdetail im Bereich der federnden Lagerung **06** auf einer Gehäusewandung **03** und der Verrastung **05** dargestellt. Gezeigt ist ein Federelement **07,** das unter Erzeugung einer Rückstellkraft einen vorgegebenen Vertikalhub **09,** der beispielsweise zwischen 2 mm und 12 mm liegt, ausführen kann. Die Federelemente **07** sind an gegenüberliegenden Kanten **10** der Abdeckplatte **04** angeordnet, sodass diese gleichmäßig den Vertikalhub **09** ausführt und beim Herunterdrücken von der Rückstellkraft des Federelements **07** beaufschlagt wird. Der federnden Lagerung **06** ist zur Außenseite **11** des Gehäusekastens **02** ein Dichtelement **12** vorgelagert, das Eindringen von Wasser in den Innenbereich **13** des Gehäusekastens **02** vermeidet. Die Abdeckplatte **04** ist auf einem Querschenkel **14** eines im wesentlichen zumindest L-förmigen Trägerprofils **15,** das parallel zur Kante **10** im Kantenbereich der Abdeckplatte **04** verläuft, über eine Dichtung **16,** im gezeigten Ausführungsbeispiel aus Dichtkleber, gelagert und bei der Erfindung auch fest verbunden ist. Die federnde Lagerung **06** über das Trägerprofil **15** liegt auf der Unterseite **17** der Abdeckplatte **04,** sodass diese kantenfrei ist (keine Befestigungsprofile im Kantenbereich). Im gezeigten Ausführungsbeispiel handelt es sich bei der Abdeckplatte **04** um eine Photovoltaikplatte **18** aus einer Glassscheibe **19** (Superstrat) und einer Solarzellenschicht **20.** Ein Längsschenkel **21** des Trägerprofils **15** ist mit der Gehäusewandung **03** verbunden. Im unteren Bereich des Längsschenkels **21** befindet sich die Rastvorrichtung **05,** bestehend aus einem oberen Rastelement **22** (vergleiche **FIGUR 3****),** das fest mit dem Trägerprofil **15** verbunden ist, und einem unteren Rastelement **23,** das fest mit der Gehäusewandung **03** verbunden ist. Trägerprofil **15** und oberes Rastelement **22** sind somit fest mit der Abdeckplatte **04** verbunden und werden mit dieser zusammen montiert bzw. demontiert. Bei dem unteren Rastelement **23** handelt es sich im gezeigten Ausführungsbeispiel um einen Stift **24,** der in Form eines Bolzens **25** auf einer Trägerplatte **46** befestigt ist. Die im Bereich des unteren Rastelements **23** gezeigte Durchgangsbohrung **26** erleichtert die Montage der Abdeckplatte **04,** da dadurch von der Außenseite **11** des Gehäusekastens **02** die Position des unteren Rastelements **23** detektierbar ist.

Im gewählten Ausführungsbeispiel weist die federnde Lagerung **06** zwei im Wesentlichen lambda-förmig ausgebildete elastische Dichtlippen **31** auf. Diese integrieren die Federelemente **07** und die Dichtelemente **12** in einstückiger Form zu einer Federdichtung **45.** Dabei schließt ein oberer Schenkel **32** der Dichtlippe **31** an den Querschenkel **14** des Trägerprofil **15** an. Ein erster unterer Schenkel **33** schließt direkt an die Seitenfläche **08** der Gehäusewandung **03** an. Ein zweiter unterer Schenkel **34** ragt über die Gehäusewandung **03** zur Außenseite **11** des Gehäusekastens **02** und schützt den Innenbereich **13** so vor eindringendem Wasser. Damit bildet der zweite untere Schenkel **34** in diesem Ausführungsfall das Dichtelement **12.** Der ausführbare Vertikalhub **09** der Abdeckplatte **04** wird über die Ausführungsform der Federdichtung **45** (in dem Einschub in **FIGUR 2** ist eine Bemaßung der Federdichtung **45** im Maßstab 2:1 dargestellt). Der obere Schenkel **32** weist eine erste u-förmige Abwinklung **35** auf, mit der er in eine zweite u-förmige Abwinklung **36** (jeweils eckig oder rund) des Querschenkels **14** des Trägerprofils **15** eingreift. Auf diese Weise sind beide Elemente nach der Art einer Kappnaht fest miteinander verbunden, wobei eine Klebung die Festigkeit der Verbindung noch unterstützen kann. Die sichere Verbindung ist wichtig, da bei einer Demontage der Abdeckplatte **04** die Dichtlippe **31** am Trägerprofil **15** und damit an der Abdeckplatte **04** verbleibt und bei einer erneuten Montage der Abdeckplatte **04** wieder verwendet wird.

In der **FIGUR 3** ist eine perspektivische Aufsicht auf die Solaranlage **01** nach der Erfindung mit (links) und ohne (rechts) Abdeckscheibe **04** auf zwei Gehäusekästen **02** dargestellt. Rechts sind das Trägerprofil **15** und die Rastvorrichtung **05** aus unterem Rastelement **23** und oberem Rastelement **22** dargestellt. Im gewählten Ausführungsbeispiel ist das obere Rastelement **22** als Hinterschneidungsprofil **27** mit einem Einschubbereich **28** und einem Rückhaltebereich **29** für den Bolzen **25** ausgebildet. Zur Arretierung der Abdeckscheibe **04** wird - nach der Auflage der Abdeckscheibe **04** auf den Gehäusekasten **02 -** der Bolzen **25** durch Herunterdrücken der federnden Lagerung **06** mit dem Vertikalhub **09** in den Einschubbereich **28** eingeführt, anschließend durch seitliches Verschieben der Abdeckplatte **04** im Einschubbereich **28** weitergeführt und abschließend durch Entlasten der federnden Lagerung **07** über die Rückstellkraft in den Rückhaltebereich **29** eingeführt und dort arretiert. Dementsprechend muss die Größe des Vertikalhubs **09** an die Abmessungen des Einschubbereichs **28** angepasst sein (vergleiche auch **FIGUR 4****).** Eine Demontage der Abdeckplatte **04** erfolgt entsprechend in umgekehrter Reihenfolge.

Weiterhin sind in der **FIGUR 3** das Dichtelement **12** (hier als zweiter unterer Schenkel **34** der lambda-förmigen Dichtlippe **31**) und ein Zusatzprofil **30** zu erkennen, das ebenfalls L-förmig ausgebildet ist und an allen Kanten **10** der Abdeckplatte **04** umläuft. Dadurch wird die Abdeckscheibe **04** sicher gelagert und es kann kein Wasser in den Innenbereich **13** des Gehäusekastens **02** gelangen. Das Zusatzprofil **30** weist einen kurzen Schenkel **71** auf, der ebenfalls die Abdeckplatte **04** trägt, und einen langen Schenkel **72** (vergleiche **FIGUR 2****)** auf, der parallel zum Längsschenkel **21** des Trägerprofils **15** verläuft (oder einstückig mit diesem ausgebildet ist, das Trägerprofil **15** ist dann T-förmig ausgebildet). Abdeckbleche zwischen den Gehäusekästen **02** sind in dieser **FIGUR 3** nicht dargestellt.

In der **FIGUR 4** ist ein Querschnitt durch die Solaranlage **01** nach der Erfindung aufgezeigt. Zusätzlich ist hier zu erkennen, dass das Zusatzprofil **30** im Bereich einer Kante **10** der Abdeckplatte **04** ohne Rastvorrichtung **05** ein nach außen gebogenes u-förmiges Ende **37** aufweist, mit dem es in eine Hinterschneidung **38** in der Gehäusewandung **03** eingreift, wenn die Rastvorrichtung **05** verriegelt ist. Dadurch kann die Abdeckplatte **04** bei verriegelter Rastvorrichtung **05** an keiner Kante **10** von Windlast abgehoben werden. Zu erkennen ist auch die Rastvorrichtung **05** mit dem oberen Rastelement **22** (Hinterschneidungsprofil **27** mit Einschubbereich **28** und Rückhaltebereich **29**) und dem unteren Rastelement **23** (Stift **24** bzw. Bolzen **25** und Trägerplatte **46**) und der Zusammenhang des Vertikalhubes **09** mit den Abmessungen des Hinterschneidungsprofils **27.**

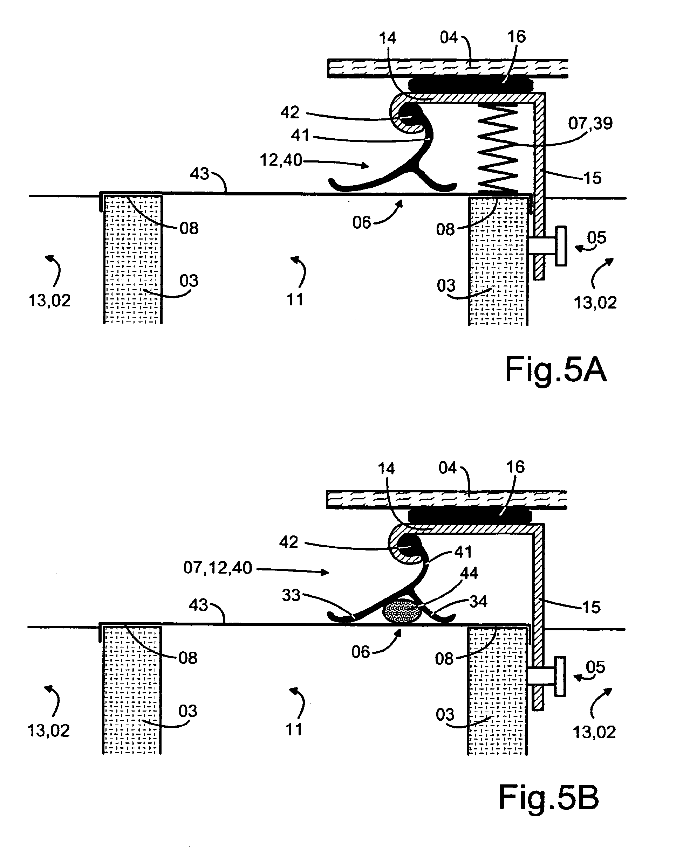

Die **FIGUREN 5A** und **5B** zeigen schematisch im Querschnitt die federnde Lagerung **06** in weiteren Ausführungsformen. In der **FIGUR 5A** ist eine parallele Anordnung von Federelement **07** und Dichtelement **12** dargestellt. Dabei ist das Dichtelement **12** dem Federelement **07** zur Außenseite **11** des Gehäusekastens **02** vorgelagert. Bei dem Federelement **07** handelt es sich um einfache druckbelastete Schraubenfeder **39,** von denen beispielsweise drei entlang jeder langen Gehäusewandung **03** des Gehäusekastens **02** angeordnet sind. Bei dem Dichtelement **12** handelt es sich um eine lambda-förmige Dichtlippe **40,** jedoch in einer anderen Ausführungsform als die Dichtlippe **31.** Der obere Schenkel **41** ist im gezeigten Ausführungsbeispiel über einen linsenförmigen Kopf **42** mit dem Querschenkel **14** des Trägerprofils **15** verbunden. Zwischen der federnden Lagerung **06** und den Seitenflächen **08** von benachbarten Gehäusekästen **02** ist ein beidseits abgewinkeltes Abdeckblech **43** zur Überdeckung der Außenseite **11** zwischen benachbarten Gehäusekästen **02** angeordnet. Auf dem Abdeckblech **43** stützt sich die Dichtlippe **40** ab, im Bereich der Schraubenfedern **39** kann das Abdeckblech **43** Aussparungen aufweisen.

In der **FIGUR 5B** ist eine einstückige Ausführung von Federelement **07** und Dichtelement **12** dargestellt. Das Dichtelement **12** wird wiederum von der Dichtlippe **40** gebildet. Das Federelement **08** wird aber in der Hauptsache von einem offenzelligen Elastikprofil **44** zwischen den unteren Schenkeln **33, 34** gebildet, das nach Art eine Schwammes zusammengedrückt werden kann und bei Entlastung wieder expandiert.

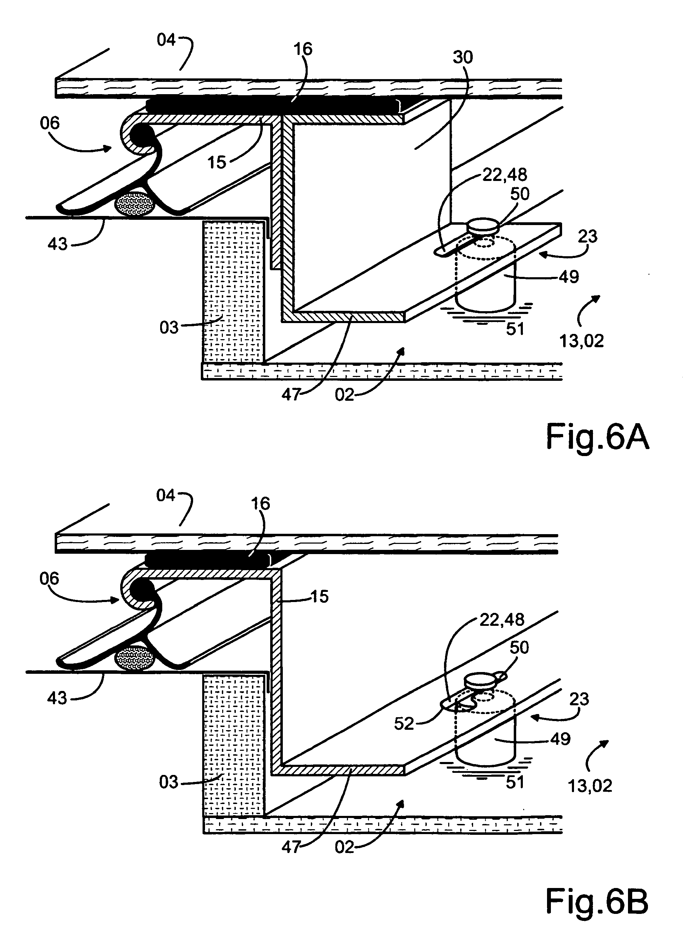

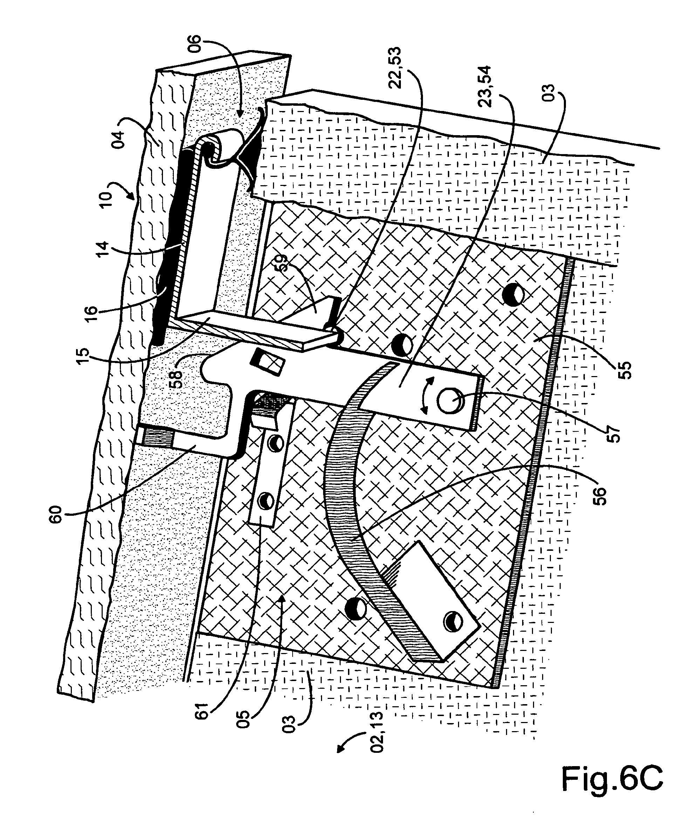

Die **FIGUREN 6A, 6B** und **6C** zeigen weitere Ausführungsmöglichkeiten der Rastvorrichtung **05** (Darstellung in verriegeltem Zustand). In der **FIGUR 6A** ist das im wesentliche L-förmige Zusatzprofil **30** vorgesehen und weist auch einen unteren Querschenkel **47** auf, der in den Innenbereich **13** des Gehäusekastens **02** hineinragt und in dem das obere Rastelement **22** in Form eines Einschubprofils **48** ausgebildet ist. Das untere Rastelement **23** ist in Form eines Rastbolzens **49** mit einer Einschubnut **50** (gestrichelt dargestellt) ausgebildet. Der Rastbolzen **49** ist fest mit dem Gehäuseboden **51** des Gehäusekastens **02** verbunden. Zur Verriegelung wird die Abdeckscheibe **04** mit dem Zusatzprofil **30** entlang der Gehäusewandungen **03** in den Gehäusekasten **02** von oben eingeschoben, wobei die federnde Lagerung **06** belastet wird. Durch seitliche Verschiebung der Abdeckplatte **04** wird der Rastbolzen **49** im Bereich seiner Einschubnut **50** im Einschubprofil **48** fixiert. Im dargestellten Ausführungsbeispiel ist das Zusatzprofil **30** nur abschnittsweise ausgebildet, sodass das Einschubprofil **48** offen ist und das Einfädeln des Rastbolzens **49** seitlich erfolgen kann.

Die **FIGUR 6B** zeigt eine Ausführungsform ohne Zusatzprofil **30.** dabei ist das Trägerprofil **15** treppenförmig ausgebildet und weist auch einen unteren Querschenkel **47** auf. Da dieser zusammen mit dem Trägerprofil **15** durchgängig ausgebildet ist, ist das Einschubprofil **48** geschlossen ausgebildet und weist einen Einfädelbereich **52** für den Rastbolzen **49** auf.

In der **FIGUR 6C** ist eine Ausführungsform der Rastvorrichtung **05** in einer Schnittdarstellung durch die Abdeckplatte **02** und das Trägerprofil **15** einschließlich federnder Lagerung **06** vor einer Gehäusewandung **03** im Innenbereich **13** des Gehäusekastens **02** (Blick in Richtung Gehäusewandung **03**) dargestellt. Dabei ist das obere Rastelement **22** als Stiftfortsatz **53** und das untere Rastelement **23** als Rasthaken **54** ausgebildet. Der Stiftfortsatz **53** ragt am unteren Ende des Trägerprofils **15** aus dem Längsschenkel **21** des Trägerprofils **15** heraus. Der Rasthaken **54** ist auf einer Platte **55** an der Gehäusewandung **03** befestigt und über eine Feder **56** und eine Achse **57** federnd und drehbar gelagert. Beim vertikalen Einführen des Stiftfortsatzes **53** von oben entlang einer Abschrägung **58** wird der Rasthaken **54** gegen die Feder **56** zurückgedrückt und verrastet dann mit einer Rastnase **59** hinter dem Stiftfortsatz **53.** Die federnde Lagerung **06** der Abdeckplatte **04** erzeugt dabei eine Rückstellkraft, die zum Entriegeln der Abdeckplatte **04** führt, wenn der Rasthaken **54** zurückgezogen wird. Zum Zurückziehen ist am Rasthaken **54** ein Hebel **60** vorgesehen, in den ein entsprechendes Werkzeug eingeführt werden kann. Zur Arretierung des Rasthakens **54** in geöffneter Position ist ein gefederter Rückhalthaken **61** vorgesehen.

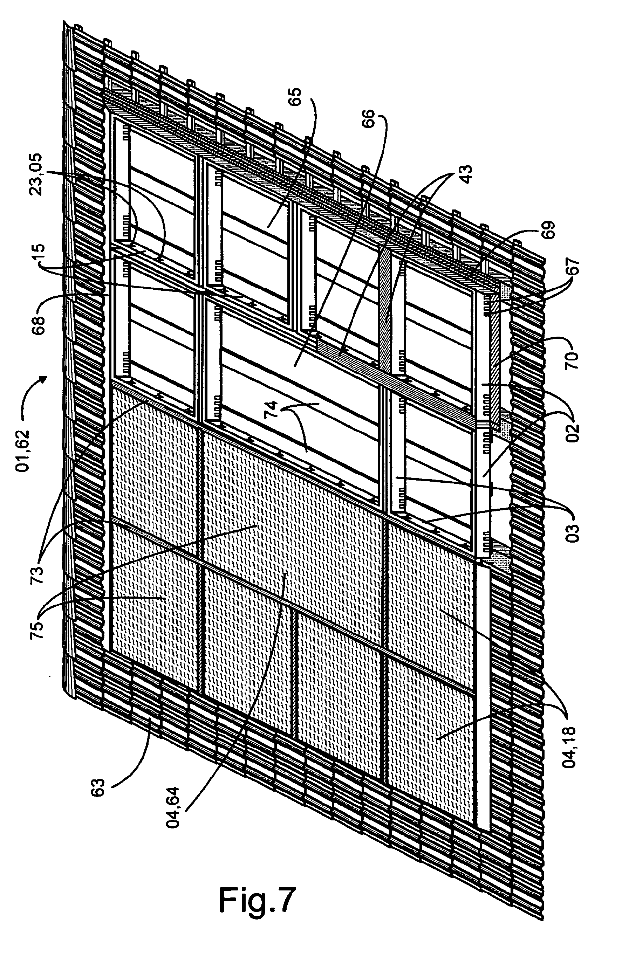

Die **FIGUR 7** zeigt eine Solaranlage **01** nach der Erfindung als wasserführende Indachanordnung **62** auf einem Schrägdach **63** als Substrat in einer perspektivischen Gesamtansicht. Links sind Gehäusekästen **02** mit Abdeckplatten **04** dargestellt. Zu erkennen ist der kantenfreie, harmonische Gesamteindruck der Solaranlage **01** mit einem Spalt **73** konstanter Breite zwischen allen Abdeckplatten **04.** Es ist nicht zu erkennen, welche Solarmodule **75** (Photovoltaik, Solarthermie) unterschiedlicher Funktion angeordnet sind. Dabei sind sechs Abdeckplatten **04** als Photovoltaikplatten **18** zur Erzeugung von Solarstrom und eine Abdeckplatte **04** als Glasplatte **64** über einem Solarabsorber (oder direkt als Absorberplatte) zur Erzeugung von Solarthermie ausgebildet. Rechts sind Gehäusekästen **02** nur ohne Abdeckplatten **04** dargestellt. Dabei haben die Gehäusekasten **02** keine Böden, sodass die Dachsparren **74** zu erkennen sind. Angedeutet sind bei den kurzen Gehäusekästen **65** jeweils drei untere Rastelemente **23** und bei dem langen Gehäusekästen **66** sechs untere Rastelemente **23** im Trägerprofil **15** entlang der Gehäusewandung **03** zur Bildung der Rastvorrichtung **05.** Dabei sind die Rastelemente **23** auf beiden gegenüberliegenden Gehäusewandungen **03** vorgesehen und es ergeben sich jeweils drei bzw. sechs Paare für die Rastvorrichtung **05.** Weiterhin sind Belüftungsöffnungen **67** in den Gehäusewandungen **03** zur guten Durchlüftung der Gehäusekästen **02** dargestellt. Zwischen den Gehäusekästen **02** sind doppelt abgewinkelte Abdeckbleche **43** angeordnet (vergleiche **FIGUREN 5A, 5B**). Als Anschluss der Gehäusekästen **02** an das Schrägdach **63** sind entsprechende Firstanschlussbleche **68** mit schrägen oder gekanteten Anschlussflächen für den Firststein, Ziegelanschlussbleche **69** mit mehreren Aufnahmekanten für angrenzende Dachsteine und Traufanschlussbleche **70** mit schrägen oder gekanteten Anschlussflächen für den Traufstein oder die Regenrinne vorgesehen.

### BEZUGSZEICHENLISTE

- **01**: Solaranlage
- **02**: Gehäusekasten
- **03**: Gehäusewandung
- **04**: Abdeckplatte
- **05**: Rastvorrichtung
- **06**: federnde Lagerung
- **07**: Federelement
- **08**: Seitenfläche
- **09**: Vertikalhub
- **10**: Kante
- **11**: Außenseite
- **12**: Dichtelement
- **13**: Innenbereich
- **14**: Querschenkel
- **15**: Trägerprofil
- **16**: Dichtung
- **17**: Unterseite
- **18**: Photovoltaikplatte
- **19**: Glassscheibe
- **20**: Solarzellenschicht
- **21**: Längsschenkel
- **22**: oberes Rastelement
- **23**: unteres Rastelement
- **24**: Stift
- **25**: Bolzen
- **26**: Durchgangsbohrung
- **27**: Hinterschneidungsprofil
- **28**: Einschubbereich
- **29**: Rückhaltebereich
- **30**: Zusatzprofil
- **31**: elastische lambda-förmige Dichtlippe
- **32**: oberer Schenkel
- **33**: erster unterer Schenkel
- **34**: zweiter unterer Schenkel
- **35**: erste u-förmige Abwinklung
- **36**: zweite u-förmige Abwinklung
- **37**: u-förmiges Ende
- **38**: Hinterschneidung
- **39**: druckbelastete Schraubenfeder
- **40**: lambda-förmige Dichtlippe
- **41**: oberer Schenkel
- **42**: linsenförmiger Kopf
- **43**: Abdeckblech
- **44**: offenzelliges Elastikprofil
- **45**: Federdichtung
- **46**: Trägerplatte
- **47**: unterer Querschenkel
- **48**: Einschubprofil
- **49**: Rastbolzen
- **50**: Einschubnut
- **51**: Gehäuseboden
- **52**: Einfädelbereich
- **53**: Stiftfortsatz
- **54**: Rasthaken
- **55**: Platte
- **56**: Feder
- **57**: Achse
- **58**: Abschrägung
- **59**: Rastnase
- **60**: Hebel
- **61**: Rückhalthaken
- **62**: Indachanordnung
- **63**: Schrägdach
- **64**: Glasplatte
- **65**: kurzer Gehäusekasten
- **66**: langer Gehäusekasten
- **67**: Belüftungsöffnung
- **68**: Firstanschlussblech
- **69**: Ziegelanschlussblech
- **70**: Traufanschlussblech
- **71**: kurzer Schenkel
- **72**: langer Schenkel
- **73**: Spalt
- **74**: Dachsparren
- **75**: Solarmodul

## Patentansprüche

1. Solaranlage (01) aus zumindest einem Solarmodul (75) mit jeweils einem Gehäusekasten (02) mit einer Abdeckplatte (04) und einer Rahmenkonstruktion aus einem im Wesentlichen zumindest L-förmigen Trägerprofil (15), dessen Querschenkel (14) unter Zwischenlage einer Dichtung (16) auf der Unterseite (17) der Abdeckplatte (04) kantenparallel angeordnet und dessen Längsschenkel (21) mit einer Gehäusewandung (03) des Gehäusekastens (02) verbunden ist, und einer Rastvorrichtung (05) mit zumindest einem oberen Rastelement (22) und einem unteren Rastelement (23) zur Fixierung der Abdeckplatte (04) auf dem Gehäusekasten (02),
mit
einer federnden Lagerung (06) der kantenfreien Abdeckplatte (04) auf den Gehäusewandungen (03) über zumindest zwei Federelemente (07) mit einem eine Rückstellkraft erzeugenden, in seiner Größe vorgegebenen Vertikalhub (09), die an gegenüberliegenden Kanten (10) der Abdeckplatte (04) auf deren Unterseite (17) kantenparallel angeordnet sind, wobei zumindest der federnden Lagerung (06) zur Außenseite (11) des Gehäusekastens (02) hin Dichtelemente (12) vorgelagert sind, **GEKENNZEICHNET DURCH** eine feste Verbindung des oberen Rastelements (22) mit dem Trägerprofil (15), das fest mit der Abdeckplatte (04) verbunden ist, und des unteren Rastelements (23) mit dem Gehäusekasten (03), wobei das obere Rastelement (22) und das untere Rastelement (23) bei geöffneter Rastvorrichtung (05) bei auf den Gehäusekasten (02) aufgelegter Abdeckplatte (04) einen Abstand von maximal dem Vertikalhub (09) zueinander und bei geschlossener Rastvorrichtung (05) bei fixierter Abdeckplatte (04) auf dem Gehäusekasten (02) unter Belastung mit der Rückstellkraft einen lösbaren Eingriff miteinander aufweisen.

2. Solaranlage nach Anspruch 1,
**GEKENNZEICHNET DURCH**
eine Integration der Federelemente (07) in die Dichtelemente (12) zu einer einstückigen Federdichtung (45).

3. Solaranlage nach Anspruch 2,
**GEKENNZEICHNET DURCH**
eine Ausbildung der Federdichtung (45) als im Wesentlichen lambda-förmig ausgebildete elastische Dichtlippe (31), wobei ein oberer Schenkel (32) der Dichtlippe (31) an den Querschenkel (14) des Trägerprofils (15) und ein erster unterer Schenkel (33) und ein zweiter unterer Schenkel (34) an eine Gehäusewandung (03) der Gehäusekastens (02) anschließen.

4. Solaranlage nach Anspruch 2,
**GEKENNZEICHNET DURCH**
eine Anordnung eines offenzelligen Elastikprofils (44) zwischen den beiden unteren Schenkeln (33, 34) der lambda-förmig ausgebildeten elastischen Dichtlippe (40).

5. Solaranlage nach Anspruch 3,
**GEKENNZEICHNET DURCH**
eine erste u-förmige Abwinklung (35) des oberen Schenkels (32) der lambdaförmigen Dichtlippe (31), die in eine zweite u-förmige Abwinklung (36) des Endes des Querschenkels (14) des Trägerprofils (15) hineingreift.

6. Solaranlage nach Anspruch 1,
**GEKENNZEICHNET DURCH**
eine Ausbildung des unteren Rastelements (23) als im Innenbereich (13) des Gehäusekastens (02) angeordneter Stift (24) und eine Ausbildung des oberen Rastelements (22) als am Längsschenkel (21) der Trägerprofils (15) angeordnetem Hinterschneidungsprofil (27), das einen Einschubbereich (28) und einen Rückhaltebereich (29) für den Stift (24) aufweist.

7. Solaranlage nach Anspruch 6,
**GEKENNZEICHNET DURCH**
eine Ausbildung des Stifts (24) als Bolzen (25), der mit einer Trägerplatte (46) fest verbunden ist.

8. Solaranlage nach Anspruch 1,
**GEKENNZEICHNET DURCH**
eine Ausbildung des oberen Rastelements (22) als Stiftfortsatz (53) am Ende des Längsschenkels (21) des Trägerprofils (15) und eine Ausbildung des unteren Rastelements (23) als an der Gehäusewandung (03) angeordneter schwenkbarer und federbelasteter Rasthaken (54).

9. Solaranlage nach Anspruch 7,
**GEKENNZEICHNET DURCH**
einen gefederten Rückhalthaken (61), in dem der Rasthaken (54) der Rastvorrichtung (05) in geöffneter Stellung fixierbar ist.

10. Solaranlage nach Anspruch 1,
**GEKENNZEICHNET DURCH**
eine Anordnung eines L-förmigen Zusatzprofils (30), dessen kurzer Schenkel (71) in Verlängerung des Querschenkels (14) der Trägerprofils (15) die Abdeckplatte (04) trägt und dessen langer Schenkel (72) parallel zum Längsschenkel (21) des Trägerprofils (15) angeordnet ist.

11. Solaranlage nach Anspruch 1 und/oder 10,
**GEKENNZEICHNET DURCH**
eine umlaufende Anordnung des Zusatzprofils (30) und/oder der Dichtelemente (12) an allen vier Kanten (10) der Abdeckplatte (04).

12. Solaranlage nach Anspruch 1,
**GEKENNZEICHNET DURCH**
einen unteren Querschenkel (47) am Trägerprofil (15) oder am Zusatzprofil (30), der im Innenbereich (13) des Gehäusekastens (02) verläuft, und eine Ausbildung des oberen Rastelements (22) als Einschubprofil (48) im unteren Querschenkel (47) sowie eine Ausbildung der unteren Rastelements (23) als Rastbolzen (49) mit einer Einschubnut (50), wobei der Rastbolzen (49) mit dem Gehäusekasten (02) verbunden ist.

13. Solaranlage nach Anspruch 11 in Verbindung mit Anspruch 10,
**GEKENNZEICHNET DURCH**
ein nach außen gebogenes, u-förmiges Ende (37) des langen Schenkels (72) des Zusatzprofils (30) im Bereich einer Kante (10) der Abdeckplatte (04) ohne Rastvorrichtung (05), wobei bei geschlossener Rastvorrichtung (05) das u-förmige Ende (37) in eine Hinterschneidung (38) in der Gehäusewandung (03) eingreift.

14. Solaranlage nach Anspruch 1,
**GEKENNZEICHNET DURCH**
eine Indachanordnung (62) mit einer benachbarten Anordnung vom mehreren Gehäusekästen (02), wobei zwischen benachbarten Abdeckplatten (04) ein Spalt (73) und zwischen benachbarten Gehäusekästen (02) oder zwischen den Gehäusekasten (02) und dem anschließenden Substrat (63) Abdeckbleche (43) oder Anschlussbleche (68, 69, 70) angeordnet sind.

15. Solaranlage nach Anspruch 1,
**GEKENNZEICHNET DURCH**
eine Ausbildung der Abdeckplatte (04) als einfache Glasplatte (64) oder als Photovoltaikplatte (18), wobei die Photovoltaikplatte (18) als Glasscheibe (19) mit einer unterseitig angeordneten Solarzellenschicht (20) oder als Laminat mit eingegossenen Solarzellen ausgebildet und wobei die Abdeckplatte (04) auf der Sichtseite einheitlich gestaltet ist.

## Claims

1. A solar system (01) comprised of at least one solar module (75) having a respective housing box (02) with a cover plate (04) and a frame structure comprised of an essentially at least L-shaped carrier profile (15), the transverse leg (14) of which has edges arranged parallel on the bottom side (17) of the cover plate (04) with a gasket (16) interspersed, and the longitudinal leg (21) of which is joined with a housing wall (03) of the housing box (02), and a latching device (05) with at least one upper latching element (22) and a lower latching element (23) for fixing the cover plate (04) onto the housing box (02), with a resilient mounting (06) of the edgeless cover plate (04) on the housing walls (03) by means of at least two spring elements (07) with a vertical stroke (09) of a prescribed magnitude that generates a restoring force, the edges of which are arranged parallel on the bottom side (17) of the cover plate (04) on opposing edges (10) thereof, wherein sealing elements (12) are situated upstream from at least the resilient mounting (06) toward the outside (11) of the housing box (02),
**characterized by**
a fixed connection between the upper latching element (22) and the carrier profile (15), which is rigidly connected with the cover plate (04), and between the lower latching element (23) and the housing box (03), wherein the upper latching element (22) and lower latching element (23) are spaced apart from each other by at most the vertical stroke (09) with the cover plate (04) placed on the housing box (02), and are detachably engaged with each other with the latching device (05) closed and cover plate (04) fixed in place on the housing box (02) when exposed to the restoring force.

2. The solar system according to claim 1,
**characterized by**
an integration of the spring elements (07) into the sealing elements (12) to form a one-piece spring gasket (45).

3. The solar system according to claim 2,
**characterized by**
a configuration of the spring gasket (45) as an essentially lambda-shaped elastic sealing lip (31), wherein an upper leg (32) of the sealing lip (31) adjoins the transverse leg (14) of the carrier profile (15), and a first lower leg (33) and a second lower leg (34) adjoin a housing wall (03) of the housing box (02).

4. The solar system according to claim 2,
**characterized by**
an arrangement of an open-cell elastic profile (44) between the two lower legs (33, 34) of the lambda-shaped elastic sealing lip (40).

5. The solar system according to claim 3,
**characterized by**
a first u-shaped bend (35) in the upper leg (32) of the lambda-shaped sealing lip (31), which extends into a second u-shaped bend (36) in the end of the transverse leg (14) of the carrier profile (15).

6. The solar system according to claim 1,
**characterized by**
a configuration of the lower latching element (23) as a pin (24) arranged in the inside region (13) of the housing box (02), and a configuration of the upper latching element (22) as a back-cut profile (27) that is arranged on the longitudinal leg (21) of the carrier profile (15), and exhibits an insertion area (28) and retention area (29) for the pin (24).

7. The solar system according to claim 6,
**characterized by**
a configuration of the pin (24) as a bolt (25), which is rigidly connected with a carrier plate (46).

8. The solar system according to claim 1,
**characterized by**
a configuration of the upper latching element (22) as a pin extension (53) at the end of the longitudinal leg (21) of the carrier profile (15) and a configuration of the lower latching element (23) as a pivoting and spring-loaded latching hook (54) arranged on the housing wall (03).

9. The solar system according to claim 7,
**characterized by**
a spring-suspended retention hook (61), in which the latching hook (54) of the latching device (05) can be fixed in an open position.

10. The solar system according to claim 1,
**characterized by**
an arrangement of an L-shaped extra profile (30), the short leg (71) of which extends the transverse leg (14) of the carrier profile (15) and carries the cover plate, and the long leg (72) of which is arranged parallel to the longitudinal leg (21) of the carrier profile (15).

11. The solar system according to claim 1 and/or 10,
**characterized by**
a continuous arrangement of the extra profile (30) and/or the sealing elements (12) at all four edges (10) of the cover plate (04).

12. The solar system according to claim 1,
**characterized by**
a lower transverse leg (47) on the carrier profile (15) or on the extra profile (30), which runs inside (13) the housing box (02), and a configuration of the upper latching element (22) as an insertion profile (48) in the lower transverse leg (47), as well as a configuration of the lower latching element (23) as a latching bolt (49) with an insertion groove (50), wherein the latching bolt (49) is connected with the housing box (02).

13. The solar system according to claim 11 in conjunction with claim 10,
**characterized by**
an outwardly bent, u-shaped end (37) of the long leg (72) of the extra profile (30) in the area of an edge (10) of the cover plate (04) without a latching device (05), wherein the u-shaped end (37) extends into a back-cut (38) in the housing wall (03) with the latching device (05) closed.

14. The solar system according to claim 1,
**characterized by**
an in-roof arrangement (62) with an adjacent arrangement of several housing boxes (02), wherein a gap (73) is arranged between adjacent cover plates (04), and cover sheets (43) or cover sheets (68, 69, 70) are arranged between the housing boxes (02) and adjoining substrate (63).

15. The solar system according to claim 1,
**characterized by**
a configuration of the cover plate (04) as a simple glass plate (64) or as a photovoltaic plate (18), wherein the photovoltaic plate (18) is designed as a glass pane (19) with a solar cell layer (20) arranged on the underside, or as a laminate with infused solar cells, and wherein the cover plate (04) is uniformly designed on the visible side.

## Revendications

1. Installation solaire (01) comprenant au moins un module solaire (75) avec respectivement un coffret de boîtier (02) avec une plaque de recouvrement (04) et une construction cadre à base d'un profilé de support (15) sensiblement au moins en forme de L, dont la branche transversale (14) est disposée, avec l'intercalation d'un joint (16), sur le côté inférieur (17) de la plaque de recouvrement (04) de façon parallèle aux arêtes et dont la branche longitudinale (21) est reliée à une paroi de boîtier (03) du coffret de boîtier (02), et un dispositif d'encliquetage (05) avec au moins un élément d'encliquetage (22) supérieur et un élément d'encliquetage (23) inférieur pour la fixation de la plaque de recouvrement (04) sur le coffret de boîtier (02),
avec une fixation (06) élastique de la plaque de recouvrement (04) sans arête sur les parois de boîtier (03) au moyen d'au moins deux éléments à ressort (07) avec une course verticale (09), générant une force de rappel et prédéfinie dans sa grandeur, qui sont disposées sur des arêtes (10) opposées de la plaque de recouvrement (04) sur son côté inférieur (17) de façon parallèle aux arêtes, des éléments d'étanchéité (12) étant placés en amont au moins de la fixation (06) élastique en direction du côté extérieur (11) du coffret de boîtier (02), **caractérisée par** une liaison fixe de l'élément d'encliquetage (22) supérieur avec le profilé support (15), qui est relié fixement à la plaque de recouvrement (04), et de l'élément d'encliquetage (23) inférieur avec le coffret de boîtier (03), l'élément d'encliquetage (22) supérieur et l'élément d'encliquetage (23) inférieur présentant, avec le dispositif d'encliquetage (05) ouvert et la plaque de recouvrement (04) posée sur le coffret de boîtier (02), un espacement d'au maximum la course verticale (09) et présentant, avec le dispositif d'encliquetage (05) fermé, la plaque de recouvrement (04) fixée sur le coffret de boîtier (02) et sous charge avec la force de rappel, un engrènement amovible entre les éléments.

2. Installation solaire selon la revendication 1,
**caractérisée par**
une intégration des éléments à ressort (07) dans les éléments d'étanchéité (12) pour former un joint à ressort (45) d'une seule pièce.

3. Installation solaire selon la revendication 2,
**caractérisée par**
une conception du joint à ressort (45) sous forme de lèvre d'étanchéité (31) élastique conçue sensiblement en forme de lambda, une branche (32) supérieure de la lèvre d'étanchéité (31) se raccordant à la branche transversale (14) du profilé support (15) et une première branche (33) inférieure et une seconde branche (34) inférieure se raccordant à une paroi de boîtier (03) du coffret de boîtier (02).

4. Installation solaire selon la revendication 2,
**caractérisée par**
un agencement d'un profilé élastique (44) à cellules ouvertes entre les deux branches (33, 34) inférieures de la lèvre d'étanchéité (40) élastique conçue en forme de lambda.

5. Installation solaire selon la revendication 3,
**caractérisée par**
une première partie coudée (35) en U de la branche (32) supérieure de la lèvre d'étanchéité (31) en forme de lambda, qui s'engage dans une seconde partie coudée (36) en forme de U de l'extrémité de la branche transversale (14) du profilé support (15).

6. Installation solaire selon la revendication 1,
**caractérisée par**
une formation de l'élément d'encliquetage (23) inférieur sous forme de broche (24) disposée dans la zone intérieure (13) du coffret de boîtier (02) et une formation de l'élément d'encliquetage (22) supérieur sous forme de profil de contre-dépouille (27) disposé sur la branche longitudinale (21) du profilé support (15), qui présente une zone d'introduction (28) et une zone de retenue (29) pour la broche (24).

7. Installation solaire selon la revendication 6,
**caractérisée par**
une formation de la broche (24) sous forme de boulon (25), qui est relié fixement à une plaque support (46).

8. Installation solaire selon la revendication 1,
**caractérisée par**
une formation de l'élément d'encliquetage (22) supérieur sous forme de prolongement de broche (53) sur l'extrémité de la branche longitudinale (21) du profilé support (15) et une formation de l'élément d'encliquetage (23) inférieur sous forme de crochet d'encliquetage (54) disposé sur la paroi de boîtier (03), basculant et sollicité par ressort.

9. Installation solaire selon la revendication 7,
**caractérisée par**
un crochet de retenue (61) monté sur ressort, dans lequel le crochet d'encliquetage (54) du dispositif d'encliquetage (05) peut être fixé en position ouverte.

10. Installation solaire selon la revendication 1,
**caractérisée par**
un agencement d'un profilé supplémentaire (30) en forme de L, dont la branche (71) courte porte la plaque de recouvrement (04) dans le prolongement de la branche transversale (14) du profilé support (15) et dont la branche (72) longue est disposée parallèlement à la branche longitudinale (21) du profilé support (15).

11. Installation solaire selon la revendication 1 et/ou la revendication 10,
**caractérisée par**
un agencement périphérique du profilé supplémentaire (30) et/ou des éléments d'étanchéité (12) sur l'ensemble des quatre arêtes (10) de la plaque de recouvrement (04).

12. Installation solaire selon la revendication 1,
**caractérisée par**
une branche transversale (47) inférieure sur le profilé support (15) ou sur le profilé supplémentaire (30), qui est agencée dans la zone intérieure (13) de la caisse de boîtier (02), et une formation de l'élément d'encliquetage (22) supérieur comme profil d'introduction (48) dans la branche transversale (47) inférieure et une formation de l'élément d'encliquetage (23) inférieur comme boulon d'encliquetage (49) avec une rainure d'introduction (50), le boulon d'encliquetage (49) étant relié au coffret de boîtier (02).

13. Installation solaire selon la revendication 11 en liaison avec la revendication 10,
**caractérisée par**
une extrémité (37), pliée vers l'extérieur et en forme de U, de la branche (72) longue du profilé supplémentaire (30) dans la zone d'une arête (10) de la plaque de recouvrement (04) sans dispositif d'encliquetage (05), l'extrémité (37) en forme de U s'engageant dans une contre-dépouille (38) dans la paroi de boîtier (03) lorsque le dispositif d'encliquetage (05) est fermé.

14. Installation solaire selon la revendication 1,
**caractérisée par**
un agencement dans le toit (62) avec un agencement voisin de plusieurs coffrets de boîtier (02), une fente (73) étant disposée entre des plaques de recouvrement (04) voisines et des tôles de recouvrement (43) ou des tôles de recouvrement (68, 69, 70) étant disposées entre des coffrets de boîtier (02) voisins ou entre les coffrets de boîtier (02) et le substrat (63) consécutif.

15. Installation solaire selon la revendication 1,
**caractérisée par**
une formation de la plaque de recouvrement (04) sous forme de plaque de verre (64) simple ou sous forme de plaque photovoltaïque (18), la plaque photovoltaïque (18) étant conçue sous forme de vitre de verre (19) avec une couche à cellules solaires (20) disposée côté inférieur ou sous forme de stratifié avec des cellules solaires coulées et la plaque de recouvrement (04) étant conçue de façon homogène sur le côté visible.
